# FASCICULE DE BREVET EUROPEEN

(11) **EP 0 608 945 B1**
(45) Date de publication et mention de la délivrance du brevet: **17.06.1998**
(21) Numéro de dépôt: 94200151.2
(22) Date de dépôt: 21.01.1994
(51) Int. Cl.: G01C 21/02, H04N 3/15, B64G 1/36

(54) **Viseur d'étoile à matrice de DTC, procédé de détection, et application au recalage d'un engin spatial**
Sterndetektor mit ladungsgekoppelter Matrix, Verfahren zur Detektion und Anwendung zur Neueinstellung eines Raumfahrzeuges
Star sensor with CCD-array, method of detection and application to reposition a spacecraft

(30) Priorité: 27.01.1993 FR 9300807
(43) Date de publication de la demande: 03.08.1994
(73) Titulaire: SOCIETE ANONYME D'ETUDES ET REALISATIONS NUCLEAIRES S.O.D.E.R.N., 94450 Limeil-Brevannes (FR); Philips Electronics N.V., 5621 BA Eindhoven (NL)
(72) Inventeur: Pezant, Christian, Siciété S.P.I.D., F-75008 Paris (FR)
(74) Mandataire: Signore, Robert

(56) Documents cités:
- EP-A- 0 499 319
- EP-A- 0 499 320
- US-A- 4 672 220
- US-A- 4 740 681

## Description

La présente invention concerne un viseur d'étoiles pour l'analyse de l'image d'au moins un objet lumineux, comportant un capteur de position qui met en oeuvre une matrice détectrice d'éléments photosensibles à transfert de charges (DTC) et une mémoire d'image dans laquelle est transférée, après chaque temps d'intégration Ti et pendant un temps de lecture Tl sous forme d'échantillons numériques, l'image détectée par ladite matrice et où elle remplace l'image précédente.

L'invention concerne aussi un procédé de détection par accumulation d'imagettes définies par des fenêtres de position variable, sur la matrice de DTC, et elle s'applique avantageusement au recalage stellaire d'un satellite manoeuvrant.

Afin d'obtenir les deux informations (en coordonnées cartésiennes) permettant de déterminer complètement la direction de l'objet lumineux observé, notamment une étoile, il est connu, par exemple du brevet des Etats-Unis d'Amérique n° 4 430 673 d'utiliser un détecteur photosensible constitué par une matrice de détection à transfert de charges. Ce détecteur se présente comme une mosaïque d'éléments d'image (pixels) divisée en deux parties : une première moitié, la zone photosensible est destinée à recevoir et à détecter le rayonnement lumineux en provenance de l'objet visé, et la deuxième moitié, recouverte d'un film opaque, sert de mémoire analogique dans laquelle sont stockées, par transfert de charges, les informations reçues par la première moitié de la matrice pendant une durée Ti dite durée d'intégration. les deux moitiés du détecteur matriciel ont, de préférence, des commandes de transfert de charge séparées. Un registre de lecture reçoit ensuite, toujours par transfert de charges, ligne par ligne, les informations contenues dans la zone mémoire, puis ces informations sont fournies sous forme analogique à un étage de sortie à partir duquel elles peuvent être lues pixel par pixel de façon à pouvoir reconstituer l'image préalablement obtenue sur la zone photosensible sous forme d'échantillons numériques, emmagasinés dans une mémoire d'image. Pour la visée stellaire notamment, un premier mode de fonctionnement du dispositif, dit mode de recherche, consiste à définir, dans une sous matrice de détection dite fenêtre de recherche contenue dans la matrice décrite plus haut, la position, au pixel près, de l'objet lumineux recherché, étant entendu que la fenêtre de recherche a été préalablement définie à partir d'un senseur inertiel, par exemple, installé sur le même appareil que le dispositif de visée de l'objet lumineux (sur un engin spatial généralement). Quelle que soit la magnitude, l'objet lumineux observé, en général une étoile, résulte, sur la matrice de détection en un point lumineux dont le diamètre est de l'ordre de quelques pixels en supposant une légère défocalisation, effectuée par l'objectif. En mode de recherche, le pixel qui reçoit ainsi tout le signal de la source émissive (l'étoile) recherchée permet d'atteindre le but indiqué ci-dessus en donnant la direction de l'étoile par ses coordonnées avec une précision égale à 0,5 fois le côté d'un pixel.

Un viseur d'étoiles à matrice de DTC est conçu pour couvrir un champ carré ou rectangulaire de quelques degrés sur quelques degrés, un degré étant lui-même couvert par environ 100 pixels sur la matrice.

Pour assurer la mesure d'attitude quelle que soit l'orientation de l'axe de visée du viseur dans l'espace, il faut que, pour toute orientation prise au hasard, au moins une étoile mesurable soit présente dans le champ du viseur. L'expérience montre que, pour ce faire, il faut introduire dans le catalogue d'étoiles du viseur, des étoiles de magnitude moyenne, typiquement 5 à 6, le catalogue d'étoiles nécessaire, sur les 4 II stéradians de la sphère céleste, étant de l'ordre de 1000 étoiles.

Si le mouvement angulaire du viseur par rapport aux étoiles est lent, ce qui est le cas par exemple lorsque le viseur est monté sur un satellite non manoeuvrant (qui défile naturellement sur son orbite), l'intégration sur la matrice de DTC d'une étoile, même peu lumineuse, ne pose pas de problème car l'effet de traînée est faible et le rapport signal sur bruit S/B reste suffisant, avec un temps d'intégration Ti de l'ordre d'une seconde, pour que le barycentre énergétique du signal détecté dans chaque fenêtre d'intégration puisse être identifié comme étant la trace de l'étoile recherchée, qui appartient au catalogue d'étoiles précité. Un tel état de l'art selon lequel des viseurs d'étoiles sont utilisés en association avec des senseurs inertiels pour des mesures précises d'attitude de satellites artificiels est décrit par exemple dans le brevet US 4 617 634.

Ainsi, avec les viseurs existants, la fréquence de mesure est limitée par l'intensité de l'étoile à mesurer. On est alors conduit à des dispositifs de mesure basses fréquences, égales au maximum à quelques hertz. Ceci ne permet donc pas de détecter la position d'étoile(s) dès que les mouvements angulaires de la plate-forme support du viseur deviennent de l'ordre un degré par seconde et plus. La visée, en particulier la phase de détection, devient alors impossible, l'effet de traînée étant trop marqué, autrement dit, l'énergie disponible étant répandue sur un trop grand nombre de pixels. Des mouvements angulaires de l'ordre du degré par seconde et plus se rencontrent sur des satellites manoeuvrants, des satellites d'observation notamment.

Une solution connue pour résoudre le problème technique indiqué au paragraphe précédent consiste à utiliser comme viseurs stellaires des tubes dissecteurs d'image. De tels tubes permettent de viser des étoiles de magnitude supérieure, de l'ordre de 7 ou 8, et de mouvement angulaire plus rapide que les viseurs à DTC : un petit module de mesure constituant un filtre de poursuite d'une étoile sur le tube permet de réaliser un asservissement de la position de l'axe du tube sur la direction de l'étoile. Cependant le tube dissecteur d'image présente les défauts inhérents à une technologie analogique : complexité, fragilité, poids, encombrement élevés, autant d'inconvénients d'ailleurs accrus dans un contexte spatial.

Selon le brevet US-A 4,672,220 qui se rapporte au même domaine technique, une seule intégration lumineuse est effectuée sur le senseur DTC, suivie par une lecture unique de tous les pixels de la matrice DTC ; au niveau de signal de chaque pixel est substitué, dans le sens des lignes, ce même niveau augmenté du signal somme de plusieurs pixels qui lui sont adjacents, ce qui revient à effectuer une intégration, au sens mathématique, selon une fenêtre glissante de faible largeur.

Dans la demande de brevet EP-A 0 499 320, le problème posé est différent de celui qui est au départ de la présente invention. Il s'agit d'identifier une tâche lumineuse, sans effet de trainée, qui s'étend sur plusieurs pixels à cause d'une légère défocalisation volontairement créée par le système optique. Là encore, la solution technique trouvée requiert une seule lecture de la matrice de DTC.

Un but de l'invention est de détecter des étoiles faiblement lumineuses présentant des mouvements angulaires rapides au moyen d'un viseur à matrice de DTC.

Un autre but est de permettre à un engin (aéro)spatial d'observation de recaler sa position sur des étoiles faiblement lumineuses au moyen de viseurs à matrice de DTC montés sur des plates-formes directement solidaires dudit engin spatial.

Selon l'invention, ces buts sont atteints grâce au fait que le viseur d'étoiles indiqué au premier paragraphe est remarquable en ce que, pour la détection et l'analyse d'image d'objets faiblement lumineux en mouvement rapide, ledit viseur d'étoiles ayant, à tout instant, à disposition, quant au déplacement dudit objet lumineux par rapport audit capteur de position, des informations d'assistance fournies par des moyens de repérage de référentiel lié audit objet lumineux, il comporte en outre une section de mémoire numérique de fenêtre consacrée à la mémorisation d'une fenêtre, contenant l'image dudit objet lumineux, de dimensions prédéterminées et de position variable sur ladite matrice détectrice, des moyens de sélection pour, pendant chaque temps d'intégration Tiₙ₊₁, sélectionner dans l'image contenue en mémoire ladite fenêtre recalée relative au temps d'intégration précédent Tiₙ, des moyens d'addition pour additionner, échantillon de pixel par échantillon de pixel, ladite fenêtre recalée à la fenêtre préalablement contenue dans ladite section de mémoire numérique et pour remplir cette dernière avec le résultat d'addition ainsi obtenu, avant la fin de l'intégration de l'image intégrée au temps Tiₙ₊₁, le nombre total de fenêtres accumulées, permettant d'obtenir un rapport signal sur bruit satisfaisant pour l'image de l'étoile visée, étant égal à P, et qu'il est muni de moyens de calcul pour la détermination de la position de l'image de l'objet lumineux sur ladite matrice, par calcul de barycentres et addition vectorielle de ces barycentres.

L'invention repose en premier lieu sur l'idée que, le nombre d'étoiles de magnitude moyenne étant suffisant pour atteindre les buts recherchés, il n'est pas nécessaire de faire appel à des étoiles de trop grande magnitude qui seraient indétectables par les matrices de DTC existantes, quel que soit leur mode de fonctionnement. Par ailleurs, l'invention est rendue possible par le fait que la fenêtre de recherche, dimensionnée sur la précision en abscisse et en ordonnée de la position de l'étoile sur la matrice, et son déplacement, sont très petits par rapport à cette dernière, ce qui permet le cumul de plusieurs dizaines de fenêtres sans sortir de la matrice de détection. L'étoile est poursuivie, sur la matrice, à une fréquence trame adaptée à l'amplitude du mouvement. Le signal peut alors être intégré par addition d'imagettes, à raison d'une imagette par fenêtre, sur une durée (période) suffisamment longue, de l'ordre de la seconde, ce qui réalise un compromis entre la précision recherchée, soit le rapport S/B, et l'amplitude du mouvement de l'étoile sur la matrice. Le signal d'étoile collecté à chaque trame (chaque intégration) étant a priori insuffisant pour permettre une détection satisfaisante, la poursuite, qui se ramène à une sélection de fenêtres successives, nécessite de connaître le mouvement apparent de l'étoile sur le détecteur ; cette information peut être obtenue à partir de capteurs inertiels, constitués soit par une centrale inertielle externe au viseur, qui fournit en permanence des informations d'attitude directement au viseur, soit par un (ou deux) capteur(s) inertiel(s) de classe moyenne, spécifique(s) et intégré(s) audit capteur de position du viseur d'étoiles, ce qui constitue deux variantes possibles pour des moyens de repérage de référentiel.

Un procédé pour l'analyse de l'image d'au moins une étoile, par un viseur d'étoiles à matrice d'éléments DTC tel que défini ci-dessus, comportant une mémoire d'images, dans laquelle est transférée, après chaque temps d'intégration Ti, pendant un temps de lecture Tl, sous forme d'échantillons numériques, l'image détectée par ladite matrice, comportant aussi une unité centrale destinée aux calculs et un séquenceur, est remarquable en ce que, pour la détection d'une étoile faiblement lumineuse et à mouvement rapide, une accumulation de P imagettes dans autant de fenêtres de dimensions prédéterminées recalées, sur ladite matrice DTC, sur ladite étoile, est effectuée, qui comporte les étapes suivantes :
- pendant le temps Tiₙ d'intégration de l'image d'ordre n le prétraitement, par l'unité centrale, des informations d'assistance, consistant à traduire dans le référentiel du viseur lesdites informations sur le mouvement relatif détecté entre le viseur et l'image qu'il reçoit sur sa matrice DTC,
- pendant le temps Ttₙ suivant, court par rapport à Tiₙ, le transfert en mémoire analogique de la matrice de l'image d'ordre n de la matrice intégrée pendant le temps Tiₙ,
- puis le calcul d'assistance, pour la détermination de la position de la fenêtre qui contient l'imagette d'ordre n,
- puis la lecture de l'image d'ordre n pendant le temps Tlₙ qui se termine avant la fin du temps Tiₙ₊₁,
- pendant un temps Taₙ, compris dans la durée Tlₙ, l'acquisition de l'imagette d'ordre n par des moyens de sélection actionnés à partir des résultats du calcul d'assistance, et
- la sommation de l'imagette d'ordre n aux imagettes précédentes dont la somme est contenue dans une section de mémoire de fenêtre, et le remplacement dans cette section de l'ancienne imagette somme, d'ordre n - 1, par la nouvelle, d'ordre n, ainsi que la mémorisation dans ladite section de la position de la fenêtre d'ordre n.

Un procédé d'accumulation d'imagettes qui fait suite au précédent est remarquable en ce que ladite unité centrale détermine la position moyenne de ladite étoile sur la matrice d'éléments DTC par addition vectorielle du vecteur barycentre géométrique des P positions de fenêtre sur ladite matrice et du vecteur barycentre énergétique qui coïncide avec la position de l'objet lumineux analysé dans l'imagette somme d'ordre P.

La description qui suit en regard des dessins annexés, le tout donné à titre d'exemple non limitatif, fera bien comprendre comment l'invention peut être réalisée.

La figure 1 est le schéma synoptique d'un viseur d'étoiles selon l'invention.

La figure 2 est un schéma explicitant le processus d'addition d'imagettes effectué par le viseur d'étoiles de la figure 1.

La figure 3 représente, en A, B et C une imagette reconstituée selon l'invention, à raison d'une seule imagette en A, du cumul de 4 imagettes en B, et du cumul de 16 imagettes en C.

La figure 4 est un diagramme de temps explicatif du déroulement des opérations pour le traitement des échantillons numériques représentatifs des pixels de la matrice DTC du viseur.

La figure 5 représente un dispositif de recopie optique d'un référentiel mécanique dans un viseur stellaire selon l'invention.

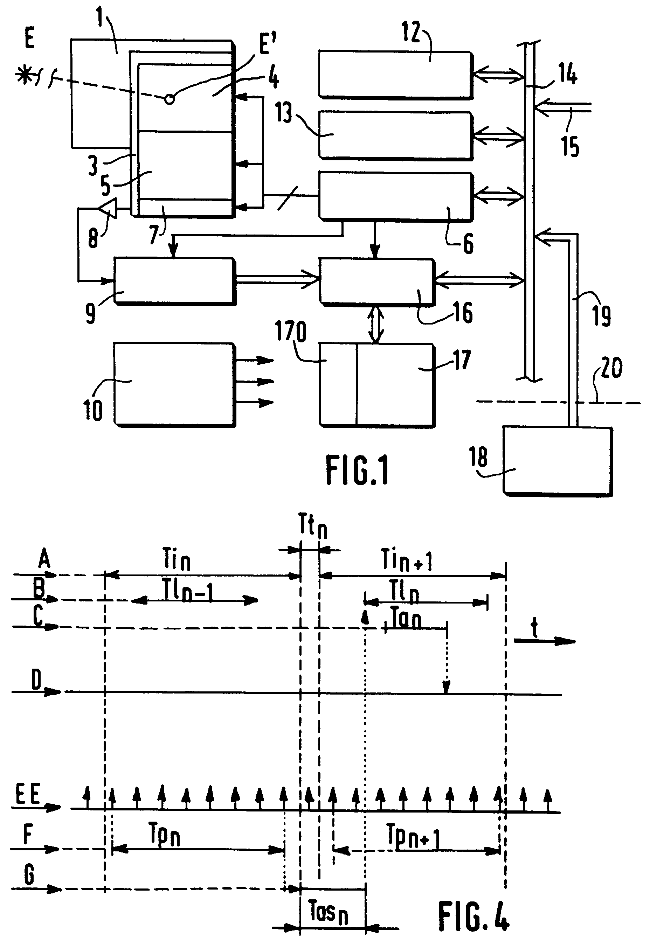

Sur la figure 1 est représenté schématiquement un viseur d'étoiles proprement dit, référencé 1. Pour sa partie connue ce viseur comporte un objectif (non représenté) qui forme de l'objet lumineux, plus particulièrement de l'étoile E une image E', couvrant environ 4 pixels sur un détecteur photosensible 3. Le détecteur 3 est une matrice de Détecteurs photosensibles à Transfert de Charges (pixels DTC) placée en substance au foyer de l'objectif. Ce détecteur est divisé en deux parties : une première moitié, la zone photosensible 4 est destinée à recevoir et à détecter par intégration de photons, le rayonnement lumineux en provenance de l'objet visé. La deuxième moitié 5 sert de mémoire analogique dans laquelle sont stockées, par transfert de charges, pendant un temps Tt court devant Ti, les informations reçues par la première moitié 4 pendant un temps d'intégration Ti. Les deux moitiés 4 et 5 du détecteur matriciel 3 ont des commandes de transfert de charge séparées, issues d'un séquenceur 6. Un registre de lecture 7 reçoit ensuite, toujours par transfert de charge ligne par ligne sous la commande du séquenceur 6, les informations contenues dans la zone mémoire, puis ces informations sont fournies sous forme analogique, après amplification à travers un amplificateur 8, à une chaîne vidéo assurant la conversion numérique du signal à partir de laquelle elles peuvent être lues pixel par pixel, pendant un temps Tl, de façon à pouvoir reconstituer l'image préalablement obtenue sur la zone photosensible 4, sous forme d'échantillons numériques. Dans un viseur stellaire classique, l'image numérique est fournie directement à une mémoire d'image 13. Les éléments électroniques déjà cités 6, 9 et 13 indiqués ci-dessus appartiennent à un ensemble électronique du viseur assurant l'ensemble des fonctions de mise en forme du signal et d'interface. Cette électronique, qui peut être regroupée dans un boîtier solidaire ou non du viseur 1 proprement dit comporte en outre une unité centrale 12 et les mémoires (RAM/PROM) associées 13 (qui servent entre autres de mémoires d'image), pour gérer l'ensemble et effectuer les traitements (calculs) numériques. Le séquenceur 6 génère l'ensemble des signaux d'horloge nécessaires au fonctionnement du détecteur 3 mais aussi à la chaîne vidéo 9 et au prétraitement des informations d'assistance explicitées ci-dessous. Les alimentations et servitudes de l'ensemble sont symbolisées par un bloc 10 (refroidissement de la matrice à DTC notamment).

Un bus commun 14 permet une communication bidirectionnelle entre les éléments 12, 13 et 6. Pour en terminer avec la partie classique du viseur, un bus qualifié de : bus de dialogue utilisateur, 15, est relié au bus 14.

Selon l'invention, le viseur comporte en outre, dans sa partie électronique, des moyens de sélection et des moyens d'addition, regroupés dans une unité spécifique 16 ainsi que, associée à la mémoire d'image 13, une section de mémoire de fenêtres elle-même double 17, 170. Le bloc de sélection-addition 16 est piloté par le séquenceur 6. Il reçoit les échantillons numériques en provenance de la chaîne vidéo 9, et communique de façon bidirectionnelle avec les mémoires 13, 17, 170 et avec le bus 14. En outre, le viseur reçoit sur le bus 14, en provenance d'une unité de repérage de référentiel 18, des informations d'assistance inertielle sur un bus 19. L'unité 18 peut être externe ou interne au viseur, ce qui est symbolisé par le trait interrompu 20. On suppose dans un premier temps qu'il s'agit d'une unité externe, par exemple un système de contrôle d'attitude, telle une centrale inertielle à coeur isolé, auquel cas les informations d'assistance consistent en des informations d'attitude sous la forme d'incréments de mouvement angulaire. Ceci est la forme d'assistance la plus simple, mais le viseur n'est alors plus autonome et il apparaît des problèmes de couplage mécanique tels qu'une liaison rigide nécessaire entre les référentiels du viseur stellaire et du capteur inertiel, et des contraintes électriques relatives au débit d'information et aux délais de transfert des données.

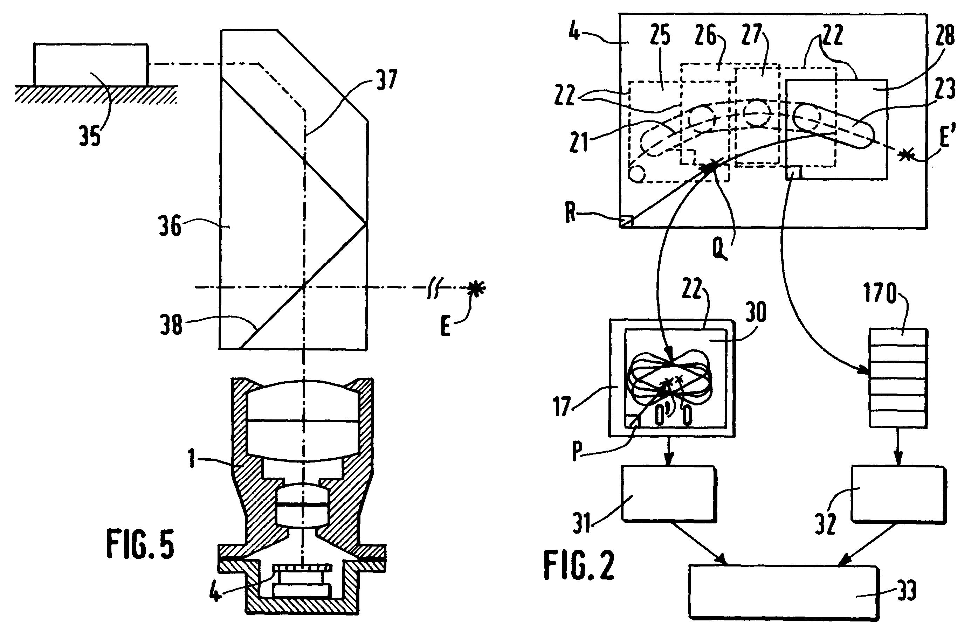

Le processus de détection d'une source émissive de faible luminosité (magnitude 5 à 6) et de mouvement rapide (de un à plusieurs degrés par seconde) est décrit ci-dessous en référence à la figure 2. Dans le cas de la visée stellaire, il repose sur le fait que les étoiles constituent un référentiel qui peut être considéré comme inertiel à l'échelle des temps de missions concernées (typiquement quelques années).

La projection de l'image de l'étoile dans la zone photosensible 4, du fait du mouvement, produit une traînée lumineuse 21 qui, dans le cas considéré, peut s'étendre sur plusieurs dizaines de pixels par seconde. La largeur de cette traînée, donnée par le diamètre de la tache image, est de l'ordre de deux pixels pour permettre le calcul barycentrique, même en l'absence de mouvement, ce qui représente le point de fonctionnement classique d'un viseur d'étoiles. Le traitement des informations d'assistance issues des capteurs inertiels et fournies par le bus 19 (figure 1) permet, à une dérive constante près, de suivre la trace de l'étoile sur la zone photosensible 4. Ce traitement consiste essentiellement en une projection dans le plan de la zone 4 du mouvement apparent de l'étoile. En pratique, c'est la plate-forme supportant le viseur qui est animée d'un mouvement par rapport à la voûte céleste. Le but de la mesure est de déterminer cette dérive qui représente la projection, sur la zone 4, du mésalignement entre la position (attitude) connue de la plate-forme à partir des moyens de repérage de référentiel (capteurs inertiels) et son attitude réelle dans le repère que constitue la voûte céleste, cette dernière attitude étant mesurée, selon l'invention, par addition d'imagettes qui constituent des sous images successives des images formées successivement sur la zone photosensible 4. En fait, l'assistance ainsi établie permet de déplacer une fenêtre de mesure 22 qui suit, en aveugle, la position de l'étoile, lors de chaque intégration sur la zone 4. La sélection de chaque fenêtre est effectuée par l'unité 16 (figure 1). En effet, les dimensions de la fenêtre, typiquement de 30 pixels en carré sont telles qu'elles correspondent à l'erreur maximale qui peut se produire sur la position de l'étoile reconstruite sur la zone 4 à partir des informations d'assistance, cette position théorique étant au centre de chaque fenêtre telle que 22. Compte tenu de la nature du détecteur qui est une matrice photosensible, le déplacement est limité en finesse au pixel près et n'est possible qu'à chaque trame (à chaque nouvelle intégration du signal). Pour être plus précis, les dimensions de la fenêtre 22 sont déterminées par l'incertitude sur la position de l'étoile, le déplacement de cette étoile pendant la durée d'une intégration, le diamètre de la tache image de l'étoile et les marges nécessaires pour appliquer les algorithmes de calcul (au premier ordre par addition des dimensions correspondantes). Le temps d'intégration Ti de chaque trame (intégration élémentaire) est adapté à l'amplitude du mouvement pendant cette même durée de manière à ce que la répartition d'énergie obtenue soit optimale, c'est-à-dire que le bruit de mesure soit minimal. Cet optimum correspond à un déplacement 23 (exagéré sur la figure 2), légèrement supérieur au diamètre de la tache image, soit typiquement 2 à 3 pixels. Les imagettes ainsi obtenues, 25, 26, 27, 28, soit les portions d'images délimitées par la fenêtre de mesure 22, sont superposées et additionnées successivement les unes aux autres, comme représenté symboliquement en 30. A chaque intégration, l'addition partielle est effectuée par l'unité 16 (figure 1) et emmagasinée dans la section de mémoires de fenêtres 17. Parallèlement, les coordonnées des fenêtres (de préférence le pixel d'abscisse et d'ordonnée zéro de la fenêtre) est également conservé dans la mémoire 170, associée à la mémoire 17. En variante, ces coordonnées peuvent être immédiatement additionnées pour préparer les calculs suivants. L'addition des imagettes est poursuivie jusqu'à obtention d'un rapport S/B suffisant pour assurer la détection de la position vraie de l'étoile à l'intérieur de la fenêtre. La représentation faite en haut de la figure 2 est volontairement inexacte, dans un but didactique. Dans la pratique, le nombre de fenêtres, le long de cette traînée est nettement plus élevé, typiquement 4 à 12 fois plus grand (16 à 50 imagettes cumulées) et la zone photosensible 4 a des dimensions environ décuples de celles représentées (des centaines de pixels en abscisse et en ordonnée).

L'amplitude de l'écart entre la positon attendue et la position réelle de l'étoile (dérive) est figurée, en 30, par le segment OO', le point O étant le centre de la fenêtre et le point O' le barycentre énergétique de la distribution de signal résultant de l'addition des imagettes. Si l'amplitude de l'écart à mesurer est trop grande, il peut s'avérer nécessaire de mettre en oeuvre un mode de recherche préalable pour détecter la position grossière de l'image de l'étoile dans la fenêtre (recherche du pixel de signal maximal par exemple). Après la recherche, la position précise de l'image de l'étoile sur la zone photosensible 4 est obtenue en combinant linéairement : le barycentre précité, O', repéré de préférence par rapport au pixel origine P de la fenêtre, soit le vecteur PO', défini par ses coordonnées cartésiennes, et la moyenne des positions des fenêtres, soit le barycentre géométrique Q, sur la zone 4, des positions des fenêtres, repéré par rapport au pixel origine R de la zone 4, soit le vecteur RQ, défini par ses coordonnées cartésiennes. Dans le cas particulier où les temps d'intégration élémentaires Ti ne sont pas égaux, le barycentre géométrique s'effectue en pondérant les positions des fenêtres par les temps d'intégration correspondants. Les calculs barycentriques, effectués par l'unité centrale 12 (figure 1), sont symbolisés, à la figure 2, par le bloc 31, pour le barycentre énergétique, et par le bloc 32, pour le barycentre géométrique. Au bloc 33 est obtenue la position moyenne de l'étoile dans le référentiel du capteur (zone 4) sur toute la durée de la mesure (somme de P intégrations élémentaires), par addition des abscisses, respectivement des ordonnées, des vecteurs RQ et PO'.

Ce résultat, comparé à l'intégration du mouvement mesuré par les capteurs inertiels sur la même période de temps, permet de recaler, de façon connue en soi, le référentiel de la plate-forme par rapport à la voûte stellaire.

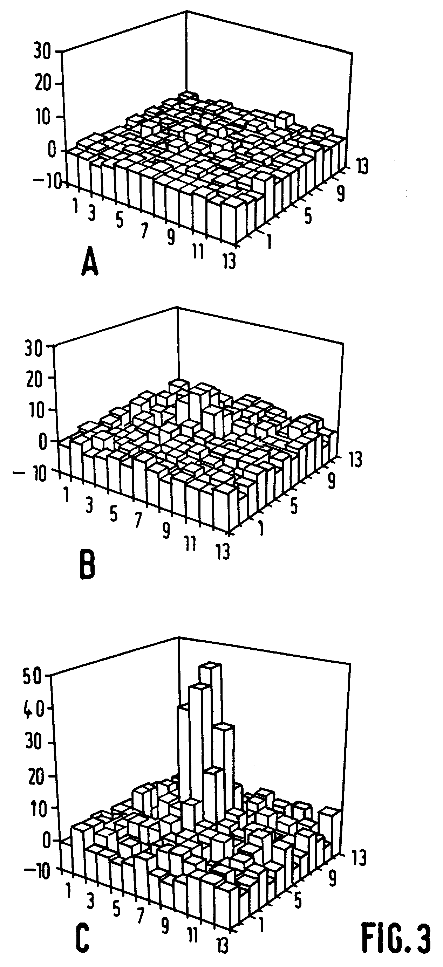

On a représenté à la figure 3 le résultat du cumul des imagettes dans une fenêtre de 13 × 13 pixels et pour une unité d'amplitude arbitraire : en A, il s'agit de la première imagette emmagasinée dans la section de mémoire 17. Le signal d'étoile n'est pas discernable du bruit, ce qui montre qu'une détection conventionnelle d'étoile serait impossible. En B, où 4 imagettes ont été additionnées, il apparaît une trace significative dans le quadrant nord-ouest de la fenêtre. Cette trace peut être celle de l'étoile recherchée mais avec une probabilité moyenne, insuffisante, car le niveau de bruit pourrait aisément atteindre les amplitude maximales obtenues, de l'ordre de 10. En C, qui représente le cumul de 16 imagettes, il est confirmé qu'il s'agit bien du signal d'étoile dans le quart nord-ouest de la fenêtre, l'amplitude maximale, pour le pixel : x = 6, y = 11, étant égale à 46. En pratique le cumul d'imagettes est poursuivi jusqu'à ce que soit obtenu un rapport S/B égal à 4 ou 5 fois l'écart type. On peut ainsi être conduit à des valeurs de P de l'ordre de 50.

La figure 4 illustre le déroulement temporel typique des principales opérations caractéristiques du mode de fonctionnement du viseur stellaire selon l'invention. Les intégrations élémentaires (intégration d'ordre n, n + 1, aux temps Tiₙ, Ti_{n+1,} ...) et les lectures correspondantes de la matrice sont entrelacées, la lecture de l'image n, pendant le temps Tlₙ (ligne B), étant réalisée pendant l'intégration suivante, d'ordre n + 1. Ce mode de lecture est rendu possible par l'architecture des matrices à DTC, telle par exemple la matrice commercialisée par la société Thomson-CSF sous la référence TH 7863, qui se présentent sous la forme d'une mosaïque d'éléments d'image divisée en deux parties, comme décrit ci-dessus au troisième paragraphe. Ces deux parties peuvent être géographiquement distinctes (matrice à transfert de trame, comme représenté à la figure 1) ou imbriquées (matrice à transfert interligne). Au moins un registre de lecture reçoit, toujours par transfert de charges et ligne par ligne, les informations stockées dans la zone mémoire analogique, qui sont ensuite dirigées vers un étage de sortie à partir duquel elles peuvent être lues, pixel par pixel de façon à pouvoir reconstituer l'image préalablement obtenue sur la zone photosensible. Cette disposition permet d'intégrer le signal avec une perte minimale de temps, c'est-à-dire une perte réduite au temps Tt de transfert de l'image de la première moitié vers la deuxième moitié de la matrice, ce temps Tt, dû aux cycles de lecture interlignes étant de l'ordre de 100 fois moindre que le temps d'intégration Ti. La lecture de l'image, pendant le temps Tl est réalisée, comme indiqué plus haut, alors que la nouvelle intégration du signal est en cours. Simultanément à l'intégration élémentaire, les informations d'assistance inertielle représentées par des flèches à la ligne EE, sont prélevées, à une fréquence environ décuple de la fréquence des intégrations élémentaires, et prétraitées, selon leur nature (il s'agit en général d'incréments de positions angulaires). Ce prétraitement, qui s'effectue (ligne F) pendant un temps Tpₙ compris dans le temps d'intégration élémentaire de même numéro d'ordre (Tiₙ) consiste, dans la partie électronique du viseur de la figure 1, à convertir les données d'assistance inertielle reçues en des données utilisables sur la matrice de détection. Pour cela, il faut effectuer une moyenne des informations d'assistance pendant le temps Tiₙ des changements de repère (de systèmes de coordonnées) et des corrections de valeurs angulaires dans un référentiel mathématique, en l'occurrence en coordonnées cartésiennes sur la matrice, étant entendu que la position initiale de l'étoile, au début de l'opération de recalage est connue et fournie sous forme d'informations d'assistance particulière par les capteurs inertiels, par exemple via le bus 15 (figure 1). Les informations d'assistance sont alors dans une forme utilisable pour établir la position de la fenêtre de mesure. Ce calcul d'assistance, qui comporte notamment des calculs d'arrondi de pixel, et qui est effectué pendant le temps Tasₙ (ligne G) au début du temps d'intégration suivant Tiₙ₊₁, doit être réalisé avant la phase de lecture de l'image (avant Tlₙ) pour permettre de sélectionner les pixels d'intérêts, c'est-à-dire d'effectuer l'acquisition de la fenêtre, au temps Taₙ, compris dans la durée Tlₙ (ligne C). Enfin (ligne D) cette fenêtre de pixels est additionnée au cumul en cours stocké dans la section de mémoire 17 (figures 1 et 2). Il est avantageux, à ce stade, de réaliser l'addition en temps réel pour éviter le stockage d'un trop grand nombre d'informations. En effet, les dimensions typiques d'une fenêtre sont du millier de pixels et le nombre d'imagettes de quelques dizaines, le tout conduisant à plusieurs dizaines de milliers d'informations (signal et coordonnées de pixels).

On n'a envisagé jusqu'ici qu'une assistance inertielle externe. Selon un autre mode de réalisation préféré, les moyens de repérage de référentiel 18 (figure 1) consistent en des capteurs inertiels spécifiques intégrés au viseur stellaire. Il est ainsi possible d'obtenir une assistance interne qui permet de s'affranchir de la liaison rigide qui est, sinon, nécessaire entre le viseur stellaire et les viseurs inertiels. Il en résulte cependant une complexité accrue du viseur stellaire. Compte tenu des besoins relativement faibles en précision et en dérive pour assurer l'assistance du viseur, ces capteurs peuvent être de classe moyenne, tels que gyromètre miniature (un gyromètre à deux axes ou deux gyromètres à un axe), ou gyromètre à diapason. Il est aussi envisageable d'utiliser deux accéléromètres couplés, disposés aux deux extrémités de l'axe du viseur.

Un troisième mode de réalisation, qui se déduit notamment des modes de solidarisation respectifs de la centrale inertielle et du viseur sur l'engin spatial permet la mise en oeuvre de l'invention. Dans ce cas, les informations d'assistance sont obtenues directement sur la matrice sous forme de mires, par recopie optique d'un référentiel mécanique dont l'attitude est connue, dans le référentiel de mesure du viseur. Il s'agit par exemple du coeur d'une centrale inertielle à cardans par exemple, comme référentiel mécanique, reliée à une plate-forme par l'intermédiaire d'une suspension mécanique, alors que le viseur est monté fixe sur cette plate-forme.

Sur la figure 5, le référentiel mécanique 35 et le viseur 1 sont supposés avoir entre eux des mouvements relatifs faibles limités par exemple aux mouvements de vibration relatifs résultant d'une suspension. Le référentiel 35 comporte un projecteur de mire (non représenté), mires qui sont injectées dans le champ de vue du viseur 1 au moyen d'un invariant optique 36 (du type : coin de cube par exemple) selon un axe optique 37. L'invariant optique 36 peut lui-même avoir une suspension indépendante de celle des éléments 1 et 35 et il comporte une lame semi-transparente 38 qui assure le mélange entre le signal de l'étoile E et des mires représentatives du référentiel mécanique 35. Dans ce cas particulier d'assistance, le viseur 1 assure lui-même la constitution des informations d'attitude dont il a besoin en mesurant les positions des mires sur la zone photosensible 4. Par exemple, la fenêtre de mesure peut être définie comme ayant une position standard prédéterminée, par rapport à deux mires, les mires restant en dehors de la fenêtre pour éviter qu'elles ne viennent se confondre avec l'étoile recherchée. Cette réalisation suppose une adaptation, à la portée de l'homme du métier, du prétraitement des informations d'assistance, visant à permettre, lors de chaque trame, la mesure des points de mire correspondants. Par ailleurs, l'intensité de ces points de mire doit être adaptée pour que la précision de mesure soit suffisante à chaque trame. Le déplacement constaté entre chaque intégration est comparable aux incréments de mouvement des formes d'assistance inertielle précédentes.

On peut avoir recours à ce dernier mode de réalisation lorsqu'il n'est pas possible d'assurer une liaison rigide entre le référentiel du viseur stellaire et celui des capteurs inertiels.

Plus généralement, recopie optique et mesures inertielles peuvent être utilisées de façon complémentaire dans le cas d'un référentiel mécanique non inertiel dont l'attitude propre est déterminée par des capteurs inertiels. Dans ce cas, une mesure précise de la position des deux référentiels s'avère nécessaire pour le recalage final du référentiel inertiel. Elle est possible en exploitant les mesures des points de mire (détermination de l'orientation des faisceaux incidents injectés). Cette association permet de constituer un ensemble de mesures dites hautes fréquences (mesures inertielles) corrigé de ses dérives (mesures stellaires selon l'invention).

Pour en revenir au procédé d'addition d'imagettes décrit plus haut, le calcul du barycentre énergétique (mode de mesure), peut être précédé de l'exécution d'un mode de recherche sur l'image cumulée pour centrer le motif de mesure, comme déjà dit. Ce mode de mesure peut être réalisé de façon classique sur un motif réduit de pixels. Toutefois, compte tenu a priori des faibles rapports S/B obtenus, il peut être avantageux d'utiliser en finale un mode de mesure sélectif qui consiste à n'effectuer le calcul de barycentre que sur les pixels de signal de plus fort niveau et agglomérés au pixel désigné par le mode de recherche, ces pixels appartenant donc a priori à l'image de l'étoile. A ce sujet on peut se référer au brevet européen n° 0 499 319 A1 au nom de la demanderesse et de N.V. Philips' Gloeilampenfabrieken (PHF91/504).

L'invention ne se limite pas aux modes de réalisation décrits ci-dessus.

Le principe de l'addition d'images précédemment décrit peut être également appliqué à la mesure simultanée de la position des centres énergétiques d'objets lumineux présentant de forts écarts d'intensité pouvant être supérieurs à la dynamique du détecteur.

Elle permet en particulier de mesurer la position d'objets brillants en mouvement rapide (vibration, bruit, ...) dans un référentiel évoluant lentement dans le temps (dérive) et repéré par des sources lumineuses faibles. Le viseur est alors utilisé comme écartomètre.

L'invention trouve une application particulièrement avantageuse dans le domaine du recalage stellaire de l'axe de visée d'un instrument d'observation spatial par un viseur d'étoiles.

Dans ce contexte du recalage stellaire et en présence de mouvements rapides de l'ensemble de la plate-forme supportant l'instrument et le viseur, ce procédé peut avantageusement être complété par l'assistance inertielle permettant d'assister le viseur et d'interpoler les mesures étoiles.

Pour effectuer le recalage de l'axe de visée de l'instrument, celui-ci doit être repéré par un (ou plusieurs) faisceau(x) collimaté(s) (mire), dont l'orientation est déterminée par rapport à une (ou plusieurs) étoile(s) de la voûte céleste.

L'injection des mires dans le champ de vue du viseur est réalisable par un mélangeur de faisceaux du même type que celui proposé pour la recopie optique précédente.

Avec les viseurs existants, la fréquence de mesure est imposée par l'objet le plus faiblement lumineux présent dans le champ de vue, en général l'étoile, et l'intensité de la mire artificielle est adaptée à ces conditions de mesure. On est ainsi conduit à des dispositifs de mesure basses fréquences, typiquement inférieures à quelques Hertz. Ceci ne permet donc pas de mesurer les oscillations correspondant aux vibrations et aux déformations des structures de satellites, se produisant à quelques dizaines de hertz.

Une solution à ce problème consiste également à adopter le mode mesure avec accumulation d'image, la mire étant poursuivie à la fréquence trame (quelques dizaines de Hz) et l'étoile sur une période suffisamment longue (de l'ordre de quelques secondes), compromis entre la précision recherchée, donc le rapport signal à bruit, et l'amplitude de la dérive à recaler.

Dans ce cas le temps d'intégration de chaque trame image est adapté au signal de la mire. L'information correspondant à cette mire étant exploitée à chaque trame, il est ainsi possible d'obtenir une mesure de position satisfaisante en précision et en fréquence de la référence liée à l'instrument d'observation. La bande passante est alors limitée par les possibilités du détecteur, soit typiquement 50 Hz pour un détecteur TV. Cette fréquence peut être plus élevée en adoptant des modes spécifiques de lecture (réduction de la zone exploitée par exemple).

La mesure de l'étoile permet de recaler la valeur moyenne du mouvement de la mire pendant le temps d'intégration, corrigeant ainsi les dérives de l'ensemble. Ceci suppose que la référence ne soit pas affectée d'autre mouvement que cette dérive. Dans le cas contraire, il est toutefois possible d'avoir recours à un autre moyen complémentaire de mesure, par exemple une mesure inertielle, permettant simultanément de mesurer les mouvements hautes fréquences du viseur pour corriger la valeur moyenne de recalage établie, et si besoin est, d'assister le viseur dans sa fonction de visée stellaire.

## Revendications

1. Viseur d'étoiles pour l'analyse de l'image d'au moins un objet lumineux, comportant un capteur de position qui met en oeuvre une matrice détectrice d'éléments photosensibles à transfert de charges (DTC) et une mémoire d'image dans laquelle est transférée, après chaque temps d'intégration Ti et pendant un temps de lecture Tl, sous forme d'échantillons numériques, l'image détectée par ladite matrice et où elle remplace l'image précédente, pour la détection et l'analyse d'image d'objets faiblement lumineux en mouvement rapide, ledit viseur d'étoiles ayant, à tout instant, à disposition, quant au déplacement dudit objet lumineux par rapport audit capteur de position, des informations d'assistance fournies par des moyens de repérage de référentiel lié audit objet lumineux comportant une section de mémoire numérique de fenêtre pour la mémorisation d'au moins une fenêtre contenant l'image dudit objet lumineux, caractérisé en ce que ladite section de mémoire numérique de fenêtre est consacrée à la mémorisation d'une fenêtre, contenant l'image dudit objet lumineux, de dimensions prédéterminées et de position variable sur ladite matrice détectrice, qu'il comporte en outre des moyens de sélection pour, pendant chaque temps d'intégration Tiₙ₊₁, sélectionner dans l'image contenue en mémoire ladite fenêtre recalée relative au temps d'intégration précédent Tiₙ, des moyens d'addition pour additionner, échantillon de pixel par échantillon de pixel, ladite fenêtre recalée à la fenêtre préalablement contenue dans ladite section de mémoire numérique et pour remplir cette dernière avec le résultat d'addition ainsi obtenu, avant la fin de l'intégration de l'image intégrée au temps Tiₙ₊₁, le nombre total de fenêtres accumulées, permettant d'obtenir un rapport signal sur bruit satisfaisant pour l'image de l'étoile visée, étant égal à P, et qu'il est muni de moyens de calcul pour la détermination de la position de l'image de l'objet lumineux sur ladite matrice, par calcul de barycentres et addition vectorielle de ces barycentres.

2. Viseur d'étoiles selon la revendication 1 dans lequel le nombre total P de fenêtres accumulées est compris entre 4 et 64.

3. Viseur d'étoiles selon la revendication 1 ou 2, pour lequel lesdits moyens de repérage de référentiel sont constitués par une centrale inertielle externe au viseur, qui fournit en permanence des informations d'attitude directement au viseur.

4. Viseur d'étoiles selon la revendication 1 ou 2, caractérisé en ce que lesdits moyens de repérage de référentiel sont constitués par au moins un capteur inertiel de classe moyenne, spécifique et intégré audit capteur de position du viseur d'étoiles.

5. Viseur d'étoiles selon la revendication 1 ou 2, caractérisé en ce que lesdits moyens de repérage de référentiel, conçus pour déterminer le mouvement relatif entre un référentiel mécanique et le référentiel du viseur, sont constitués par un projecteur de mire solidaire dudit référentiel mécanique et un invariant optique qui assure la recopie de mire(s) dans le champ de vue du viseur, ce dernier comportant des moyens de calcul d'assistance pour déduire de la position de la (des) mire(s) sur ladite matrice détectrice lesdites informations d'assistance nécessaires à la sélection de chacune des P fenêtres recalées.

6. Procédé pour l'analyse de l'image d'au moins une étoile, par un viseur d'étoiles à matrice d'éléments DTC selon l'une des revendications 1 à 4, comportant une mémoire d'images, dans laquelle est transférée, après chaque temps d'intégration Ti, pendant un temps de transfert Tt, sous forme d'échantillons numériques, l'image détectée par ladite matrice, comportant aussi une unité centrale destinée aux calculs et un séquenceur, caractérisé en ce que, pour la détection d'une étoile faiblement lumineuse et à mouvement rapide, une accumulation de P imagettes dans autant de fenêtres de dimensions prédéterminées recalées, sur ladite matrice DTC, sur ladite étoile, est effectuée, qui comporte les étapes suivantes :
- pendant le temps Tiₙ d'intégration de l'image d'ordre n le prétraitement, par l'unité centrale, des informations d'assistance, consistant à traduire dans le référentiel du viseur lesdites informations sur le mouvement relatif détecté entre le viseur et l'image qu'il reçoit sur sa matrice DTC,
- pendant le temps Ttₙ suivant, court par rapport à Tiₙ, le transfert en mémoire analogique de la matrice de l'image d'ordre n de la matrice intégrée pendant le temps Tiₙ,
- puis le calcul d'assistance, pour la détermination de la position de la fenêtre qui contient l'imagette d'ordre n,
- puis la lecture de l'image d'ordre n pendant le temps Tlₙ qui se termine avant la fin du temps Tiₙ₊₁,
- pendant un temps Taₙ, compris dans la durée Tlₙ, l'acquisition de l'imagette d'ordre n par des moyens de sélection actionnés à partir des résultats du calcul d'assistance, et
- la sommation de l'imagette d'ordre n aux imagettes précédentes dont la somme est contenue dans une section de mémoire de fenêtre, et le remplacement dans cette section de l'ancienne imagette somme, d'ordre n - 1, par la nouvelle, d'ordre n, ainsi que la mémorisation dans ladite section de la position de la fenêtre d'ordre n.

7. Procédé d'accumulation d'imagettes selon la revendication 6, caractérisé en ce que ladite unité centrale détermine la position moyenne de ladite étoile sur la matrice d'éléments DTC par addition vectorielle du vecteur barycentre géométrique des P positions de fenêtre sur ladite matrice et du vecteur barycentre énergétique qui coïncide avec la position de l'objet lumineux analysé dans l'imagette somme d'ordre P.

8. Application du viseur d'étoiles, monté sur une plate-forme d'engin spatial, selon l'une des revendications 1 à 5, au recalage stellaire dudit engin spatial par mesure de la dérive de son attitude par rapport à une étoile.

## Patentansprüche

1. Sterndetektor zur Analyse des Bildes wenigstens eines leuchtenden Objekts, einen Lagesensor umfassend, der eine ladungsgekoppelte Matrix aus photosensiblen Elementen (CCD) und einen Bildspeicher umfaßt, in den nach jeder Integrationszeit Ti und während einer Lesezeit Tl das durch besagte Matrix detektierte Bild in Form von digitalen Mustern übertragen wird und wo es das vorhergehende Bild ersetzt, wobei der genannte Sterndetektor zur Detektion und Analyse des Bildes schwach leuchtender, sich schnell bewegender Objekte bezüglich der Bewegung des genannten leuchtenden Objekts in bezug auf den genannten Lagesensor zu jedem Zeitpunkt über Hilfsinformationen verfügt, geliefert durch mit dem leuchtenden Objekt verbundene Bezugssystem-Ortungseinrichtungen, eine digitale Fenster-Speicher-Sektion für die Speicherung wenigstens eines Fensters umfassend, welche das Bild des genannten leuchtenden Objekts enthält,
**dadurch gekennzeichnet,**
daß die genannte digitale Fenster-Speicher-Sektion dazu bestimmt ist, ein das Bild des genannten leuchtenden Objekts enthaltendes Fenster mit festgelegten Abmessungen und variabler Position auf der genannten Detektormatrix zu speichern, daß er außerdem Auswähleinrichtungen umfaßt, um während jeder Integrationszeit Tiₙ₊₁ in dem im Speicher enthaltenen Bild das genannte, bezüglich der vorhergehenden Integrationszeit Tiₙ neueingestellte Fenster auszuwählen, sowie Additionseinrichtungen, um Pixelmuster für Pixelmuster das genannte neueingestellte Fenster zu dem vorher in der genannten digitalen Speichersektion enthaltene Fenster zu addieren und um diese Speichersektion mit dem so erhaltenen Additionsresultat zu füllen, vor dem Ende der Integration des in der Zeit Tiₙ₊₁ integrierten Bildes, wobei die Gesamtzahl der akkumulierten Fenster, die ermöglichen, einen für das Bild des anvisierten Sterns befriedigenden Rauschabstand herzustellen, gleich P ist, und daß er mit Recheneinrichtungen zur Bestimmung der Position des Bilds des leuchtenden Objekts auf der genannten Matrix durch Berechnung von Schwerpunkten und vektorieller Addition dieser Schwerpunkte ausgestattet ist.

2. Sterndetektor nach Anspruch 1, bei dem die Gesamtzahl P der akkumulierten Fenster enthalten ist zwischen 4 und 64.

3. Sterndetektor nach Anspruch 1 oder 2, bei dem die genannten Bezugssystem-Ortungseinrichtungen durch ein Trägheitsnavigations-Leitwerk gebildet werden, das sich außerhalb des Sterndetektors befindet und das permanent Fluglageinformationen direkt an den Sterndetektor liefert.

4. Sterndetektor nach Anspruch 1 oder 2, dadurch gekennzeichnet, daß die genannten Bezugssystem-Ortungseinrichtungen gebildet werden durch wenigstens einen Trägheitssensor mittlerer Klasse bzw. Klassierung, spezifisch und integriert in den genannten Lagesensor des Sterndetektors.

5. Sterndetektor nach Anspruch 1 oder 2, dadurch gekennzeichnet, daß die genannten Bezugssystem-Ortungseinrichtungen, konzipiert zum Bestimmen der Relativbewegung zwischen einem mechanischen Bezugssystem und dem Bezugssystem des Detektors, gebildet werden durch einen Musterprojektor, der fest mit dem genannten mechanischen Bezugssytem verbunden ist, und einer unveränderlichen Optik, die das (die) Muster im Sehfeld des Detektors abbildet, wobei dieser letztere Hilfsrecheneinrichtungen umfaßt, um aus der Position des Musters (der Muster) auf der Detektormatrix die genannten Hilfsinformationen abzuleiten, die zum Auswählen jedes der P neueingestellten Fenster nötig sind.

6. Verfahren zur Analyse des Bilds von wenigstens einem Stern durch einen Sterndetektor mit einer ladungsgekoppelten Matrix aus photosensiblen Elementen (CCD) nach einem der Ansprüche 1 bis 4, einen Bildspeicher, in den nach jeder Integrationszeit Ti und während einer Transferzeit Tt das durch besagte Matrix detektierte Bild in Form von digitalen Mustern übertragen wird, und eine für die Berechnungen bestimmte Zentraleinheit und eine Ablaufschalteinrichtung umfassend, dadurch gekennzeichnet, daß zur Detektion eines schwach leuchtenden Sterns mit schneller Bewegung eine Akkumulierung von P Bildchen in ebensovielen auf der genannten CCD-Matrix auf den genannten Stern neueingestellten Fenstern durchgeführt wird, wobei dieses Verfahren die folgenden Schritte umfaßt:
- während der Integrationszeit Tiₙ des Bildes n^{ter} Ordnung die Vorverarbeitung der Hilfsinformationen durch die Zentraleinheit, darin bestehend, die genannten Informationen über die Relativbewegung, detektiert zwischen dem Detektor und dem Bild, das er auf seiner CCD-Matrix empfängt, in das Bezugssystem des Detektors zu übertragen,
- während der nachfolgenden Zeit Ttₙ, kurz in bezug auf Tiₙ, die Übertragung der Matrix des während der Zeit Tiₙ integrierten Bildes n^{ter} Ordnung von der Matrix in den analogen Speicher,
- dann die Hilfsberechnung zur Bestimmung der Position des Fensters, das das Bildchen n^{ter} Ordnung enthält,
- dann das Lesen des Bildes n^{ter} Ordnung während der Zeit Tlₙ, die vor dem Ende der Zeit Tiₙ₊₁ endet,
- während einer Zeit Taₙ, enthalten in der Zeitdauer Tlₙ, das Erfassen des Bildchens n^{ter} Ordnung durch die Auswähleinrichtungen, betätigt aufgrund der Resultate der Hilfsberechnung, und
- Summieren des Bildchens n^{ter} Ordnung mit den vorhergehenden Bildchen, deren Summe in einer Fenster-Speicher-Sektion enthalten ist, und Ersetzen des alten Summenbildchens n-1^{ter} Ordnung in dieser Sektion durch das neue der n^{ten} Ordnung, sowie das Abspeichern der Position des Fensters n^{ter} Ordnung in der genannten Sektion.

7. Verfahren zur Akkumulierung von Bildchen nach Anspruch 6, dadurch gekennzeichnet, daß die genannte Zentraleinheit die mittlere Position des genannten Sterns auf der CCD-Matrix durch vektorielle Addition des Vektors des geometrischen Schwerpunkts der P Fensterpositionen in der genannten Matrix und des Vektors des energetischen Schwerpunkts bestimmt, der zusammenfällt mit der Position des in dem Summenbildchen P^{ter} Ordnung analysierten leuchtenden Objekts.

8. Anwendung des auf eine Raumfahrzeug-Plattform montierten Sterndetektors nach einem der Ansprüche 1 bis 5 zur stellaren Neueinstellung des genannten Raumfahrzeugs durch Messung der Abweichung seiner Fluglage in bezug auf einen Stern.

## Claims

1. Star sight for analysing the image of at least one luminous object, comprising a position sensor which employs a charge-coupled detector array (CCD) of photosensitive elements and an image memory into which is transferred, after each integration time Ti and during a read-out time Tl, in the form of digital samples, the image detected by the said array and where it replaces the previous image, for the detection and image analysis of rapidly moving weakly luminous objects, the said star sight having, at any instant, available, as regards the displacement of the said luminous object with respect to the said position sensor, assistance information delivered by means for locating a reference frame tied to the said luminous object, comprising a digital memory window section for storing at least one window containing the image of the said luminous object, characterized in that the said digital memory window section is dedicated to the storing of a window, containing the image of the said luminous object, of specified dimensions and of variable position on the said detector array, in that it furthermore comprises selection means for selecting, during each integration time Tiₙ₊₁, from the image contained in memory the said repositioned window relating to the previous integration time Tiₙ, means of addition for adding, pixel sample by pixel sample, the said repositioned window to the window previously contained in the said digital memory section and for filling the latter with the addition result thus obtained, before the end of the integration of the image integrated at time Tiₙ₊₁, the total number of windows accumulated that makes it possible to obtain a signal-to-noise ratio which is satisfactory for the image of the sighted star, being equal to P, and in that it is provided with computation means for determining the position of the image of the luminous object in the said array, by computation of barycentres and vector addition of these barycentres.

2. Star sight according to Claim 1, in which the total number P of accumulated windows is between 4 and 64.

3. Star sight according to Claim 1 or 2, for which the said reference frame locating means consist of an inertial facility external to the sight, which continually delivers attitude information directly to the sight.

4. Star sight according to Claim 1 or 2, charac-terized in that the said reference frame locating means consist of at least one specific, medium-class inertial sensor built into the said position sensor of the star sight.

5. Star sight according to Claim 1 or 2, characterized in that the said reference frame locating means, designed to determine the relative motion between a mechanical reference frame and the reference frame of the sight, consist of a reticle projector integral with the said mechanical reference frame and an optical invariant which provides for the copying of reticle(s) into the field of view of the sight, the latter comprising assistance computation means for deducing, from the position of the reticle(s) in the said detector array, the said assistance information necessary for selecting each of the P repositioned windows.

6. Method for analysing the image of at least one star, using a star sight with an array of CCD elements according to one of Claims 1 to 4, comprising an image memory, into which is transferred, after each integration time Ti, during a transfer time Tt, in the form of digital samples, the image detected by the said array, also comprising a central processing unit intended for the computations and a sequencer, characterized in that, for the detection of a rapidly moving weakly luminous star, an accumulation of P imagettes into an equal number of repositioned windows with predetermined dimensions, in the said CCD array, over the said star, is performed, which comprises the following steps:
- during the time Tiₙ of integration of the image of order n the preprocessing, by the central processing unit, of the assistance information, consisting in manifesting in the reference frame of the sight the said information on the relative motion detected between the sight and the image which it receives on its CCD array,
- during the subsequent time Ttₙ, shorter than Tiₙ, the transfer into analogue memory of the array of the image of order n of the array integrated over the time Tiₙ,
- then the assistance computation, for the determination of the position of the window that contains the imagette of order n,
- then the reading out of the image of order n during the time Tlₙ which terminates before the end of the time Tiₙ₊₁,
- for a time Taₙ, lying within the duration Tlₙ, the acquisition of the imagette of order n by selection means actuated on the basis of the results of the assistance computation, and
- the summation of the imagette of order n with the previous imagettes whose sum is contained in a window memory section, and the replacing in this section of the old sum imagette, of order n-1, by the new one, of order n, as well as the storing in the said section of the position of the window of order n.

7. Method for accumulating imagettes according to Claim 6, characterized in that the said central processing unit determines the mean position of the said star over the array of CCD elements by vector addition of the geometric barycentre vector of the P window positions over the said array and of the energy barycentre vector which coincides with the position of the luminous object analysed in the sum imagette of order P.

8. Application of the star sight, mounted on a spacecraft platform, according to one of Claims 1 to 5, to the stellar repositioning of the said spacecraft by measuring the drift in its attitude with respect to a star.
